# EUROPÄISCHE PATENTSCHRIFT

(11) **EP 2 611 642 B1**
(45) Veröffentlichungstag und Bekanntmachung des Hinweises auf die Patenterteilung: **10.06.2015**
(21) Anmeldenummer: 11793650.0
(22) Anmeldetag: 31.08.2011
(51) Int. Cl.: B60K 28/06, B62D 1/04

(54) **ÜBERWACHUNGS- UND NOTFALLSYSTEM FÜR KRAFTFAHRZEUGE**
MONITORING AND EMERGENCY SYSTEM FOR MOTOR VEHICLES
SYSTÈME DE SURVEILLANCE ET D'URGENCE POUR VÉHICULES AUTOMOBILES

(30) Priorität: 31.08.2010 DE 102010035940
(43) Veröffentlichungstag der Anmeldung: 10.07.2013
(73) Patentinhaber: Güzelocak, Denis, 81243 München (DE); Shokr, Safwat, 81243 München (DE); Gerber, Michael, 85716 Unterschleißheim (DE); Gerber, Florian, 85386 Eching (DE)
(72) Erfinder: Güzelocak, Denis, 81243 München (DE); Shokr, Safwat, 81243 München (DE); Gerber, Michael, 85716 Unterschleißheim (DE); Gerber, Florian, 85386 Eching (DE)
(74) Vertreter: Feldkamp, Rainer
(86) Internationale Anmeldenummer: PCT/EP2011/004391
(87) Internationale Veröffentlichungsnummer: WO 2012/045379

(56) Entgegenhaltungen:
- WO-A2-2004/022409
- US-A- 2 575 926
- US-A- 2 945 099
- STURM R J: "MAGNETIC FLOATING ELASTIC DIAPHRAGM SWITCH", IBM TECHNICAL DISCLOSURE BULLETIN, INTERNATIONAL BUSINESS MACHINES CORP. (THORNWOOD), US, Bd. 18, Nr. 4, 1. September 1975 (1975-09-01), XP002018475, ISSN: 0018-8689

## Beschreibung

Die Erfindung bezieht sich auf ein Überwachungs- und Notfallsystem für Kraftfahrzeuge der im Oberbegriff des Anspruchs 1 genannten Art, das eine sichere Erfassung des körperlichen Zustandes des Fahrers ermöglicht.

Obwohl die vorliegende Erfindung nachfolgend speziell in Verbindung mit Kraftfahrzeugen beschrieben wird, sind analoge Systeme auch bei Luftfahrzeugen oder Geräten anwendbar, die eine dauernde Aufmerksamkeit der Bedienungsperson erfordern.

Es ist eine Vielzahl von Überwachungs- und Notfallsystemen für Kraftfahrzeuge bekannt, die über den Außenumfang eines Lenkrades verteilte Sensoren verwenden, die entweder als Drucksensoren oder als elektrische Sensoren ausgebildet sind, die im menschlichen Körper erzeugte elektrische Signale auswerten.

Beispielsweise ist aus der DE 102004062040 A1 ein Sensorsystem bekannt, bei dem das Lenkrad eines Kraftfahrzeuges mit Lichtleitfasern umwickelt ist, die bei ihrer Verformung eine Änderung der durchgeleiteten Lichtintensität ergeben, die in Auswerteeinrichtungen ausgewertet wird. Die Empfindlichkeit derartiger Lichtleitfasern beziehungsweise das durch diese erzeugte auswertbare Signal ist jedoch relativ schwach und ist zeitlichen Änderungen unterworfen.

Aus der gattungsbildenden US 2,945,099 A ist weiterhin ein Sensorsystem bekannt, bei sich von einem leitenden Kern eines Lenkrad-Kranzes eine Vielzahl von Metallstiften radial nach außen erstreckt, deren freie Spitzen durch ein elastisches Material in Abstand von einem sich in Umfangsrichtung um den Lenkrad-Kranz erstreckenden Metallband gehalten werden. Bei Druckausübung auf den Lenkrad-Kranz ergibt sich eine leitender Kontakt zwischen den Spitzen eines oder mehrerer der Metallstifte mit dem Metallband, wodurch die Auslösung eines Alarms verhindert wird. Die mechanische Ausgestaltung dieses Sensorsystems mit einer Vielzahl von um den Umfang des Lenkrad-Kranzes verteilten Metallstiften ist in der Herstellung sehr aufwendig.

Der Erfindung liegt die Aufgabe zugrunde, ein Überwachungs- und Notfallsystem für Kraftfahrzeuge der eingangs genannten Art zu schaffen, das bei relativ einfachen Aufbau die Feststellung selbst kleiner Druckänderungen unabhängig von der Art der Auflage einer Hand des Fahrers auf die Steuerungs- und Betätigungseinrichtungen ermöglicht.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung des Überwachungs- und Notfallsystem wird eine Druckausübung an beliebigen Stellen des Lenkrades sowohl in dessen Umfangsrichtung als auch in Richtung des Umfanges seines Querschnittes des Lenkradkranzes ermöglicht, wobei eine relativ hohe Empfindlichkeit und Langzeitstabilität erreichbar ist.

Ausführungsbeispiele der Erfindung werden in folgenden anhand von in der Zeichnung dargestellten Ausführungsformen noch näher erläutert.

Ausführungsbeispiele der Erfindung werden in folgenden anhand von in der Zeichnung dargestellten Ausführungsformen noch näher erläutert.

In den Zeichnungen zeigen:
Figur 1 eine schematische Ansicht eines Lenkrades eines Kraftfahrzeuges mit daran angeordneten Sensorelementen
Figur 2 eine Teil-Querschnittsansicht durch den Lenkradkranz des Lenkrades entlang der Linie A-A nach Figur 1 einer Ausführungsform, bei der die elastischen Einrichtungen durch innere und äußere Gummischichten gebildet sind
Figur 3 eine Abwicklung des Sensorelementes bei Betrachtung von oben
Figur 4 eine abgewickelte Seitenansicht der Ausführungsform des Sensors nach den Figuren 2 und 3
Figur 5 ein Anwendungsbeispiel der Sensoranordnung nach den Figuren 1 bis 5 4.

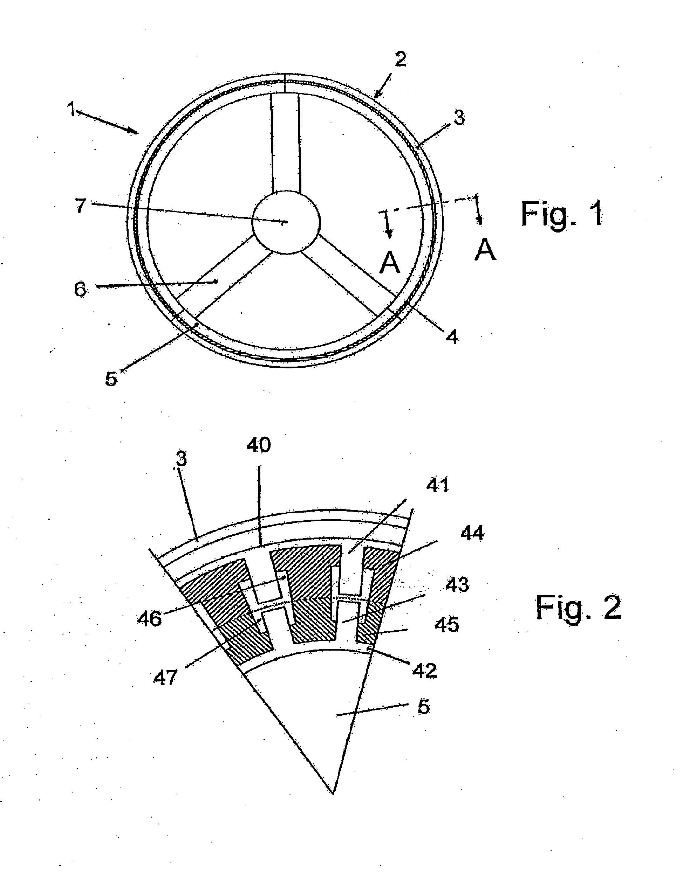

In Figur 1 ist schematisch ein Lenkrad dargestellt, das eine Nabe 7, Lenkradspeichen 6 und einen Lenkradkranz 2 mit einem Kern 5 aufweist. Der Kern 5 ist zumindest teilweise von einer Umhüllung 3 umgeben, beispielsweise aus Leder, und zwischen dem Kern 5 und der Umhüllung 3 sind Sensorelemente angeordnet, die nachfolgend noch näher erläutert werden.

In Figur 2, die eine erste Ausführungsform einer Sensoranordnung in Form einer Teil-Querschnittansicht entlang der Linie A-A nach Figur 1 zeigt, ist auf dem Kern ein flächiges Leiterelement 42 mit Kontaktvorsprüngen 43 angeordnet, über dem eine innere Gummischicht 45 mit den Kontaktvorsprüngen 43 entsprechenden Aussparungen 47 vorgesehen ist, die sich zur Außenseite hin erweitern. Über der inneren Gummischicht 45 ist eine äußere Gummischicht 44 angeordnet, die in einer der inneren Gummischicht 45 ähnlichen Weise Aussparungen 46 zur Aufnahme von Kontaktvorsprüngen 41 eines äußeren flächigen Leiterelementes 40 aufweisen.

Die Summe der Dicken der inneren und äußeren Gummischichten 44, 45 ist größer als die Summe der Höhe der Kontaktvorsprünge 41, 43, so dass deren freie Enden normalerweise in Abstand voneinander gehalten werden. Diese Gummischichten spannen weiterhin über das äußere Leiterelement die Umhüllung 3 nach außen hin vor, wobei gegebenenfalls zwischen dem äußeren Leiterelement 40 und der Umhüllung 3 eine sehr dünne Polsterung angebracht sein kann.

Es ist darauf hinzuweisen, dass die Querschnittsansicht nach Figur 2 die Gummischichten und die Höhe der Kontaktvorsprünge übertrieben darstellt, da diese in der Praxis nur sehr dünn beziehungsweise kurz sind und die Kontaktvorsprünge 41, 43 beispielsweise durch Ausprägungen einer ansonsten der Form des Lenkrades angepassten Leiterbahn 40, 42 sein können, die das innere und äußere Leiterelement 42, 40 bilden. Auf diese Weise kann in sehr wirtschaftlicher Weise eine große Anzahl von Kontaktvorsprüngen vorgesehen werden, die sowohl um den Querschnitt des Lenkrad-Kranzes 2 herum als auch um dessen Außenumfang herum verteilt sind.

Dadurch ist sichergestellt, dass selbst bei einer relativ leichten Berührung des Außenumfanges des Lenkrad-Kranzes eine Kontaktgabe zwischen den Kontaktvorsprüngen 41, 43 erfolgt, und dies bei einer Berührung an beliebigen Stellen.

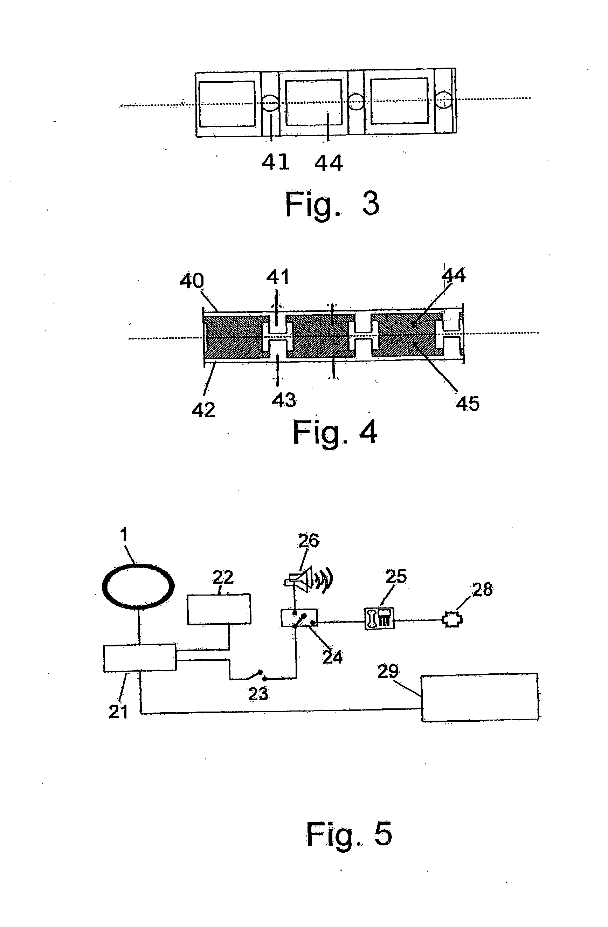

In Figur 3 ist eine Draufsicht auf das innere Leiterelement und die innere Gummischicht bei Betrachtung von der Schnittlinie zwischen den inneren und äußeren Gummischichten gezeigt, die wiederum die inneren Kontaktvorsprünge 43 und die innere Gummischicht mit dem darin vorgesehenen Ausparungen erkennen lässt.

Figur 4 zeigt eine Abwicklung der Sensoranordnung mit den inneren und äußeren Gummischichten 45, 44 und den an den Leiterelementen 42, 40 angeordneten Kontaktvorsprüngen 41, 43, ebenfalls in stark vergrößerter Form.

Obwohl zwei getrennte Gummischichten gezeigt sind, können diese beiden Gummischichten 44, 45 auch in Form einer einzigen Gummi-Hülle für den Lenkrad-Kranz 2 ausgebildet sein, so dass es zur Herstellung des Lenkrad-Kranzes lediglich erforderlich ist, zunächst das innere Lenkradelement auf dem Kern 5 des Lenkrad-Kranzes aufzubringen, worauf dann die innenliegende und außenliegende Gummischicht 45, 44 aufgezogen werden, die, wie bereits erwähnt, durch eine einzige Schicht gebildet sein können, gefolgt von einem Aufbringen des äußeren Leiterelementes mit den äußeren Kontaktvorsprüngen 41. Nach Aufbringen einer Polsterschicht kann dann eine äußere Umhüllung, beispielsweise eine aus Leder bestehende Umhüllung 3 auf die Gesamtkonstruktion aufgebracht werden.

Bei den vorstehend beschriebenen Ausführungsformen kann das Sensorelement in Umfangsrichtung des Lenkrad-Kranzes entweder als eine umlaufende Sensorelemente-Anordnung ausgebildet sein, oder es kann, wie dies in Figur 1 angedeutet ist, eine Unterteilung beispielsweise in drei Sensorelement-Abschnitte erfolgen, deren Ausgangssignale getrennt ausgewertet werden.

Eine zusätzliche Möglichkeit besteht in dem Anordnen eines leitenden Elementes, beispielsweise eines mit der äußeren Umhüllung 3 vernähten leitenden Fadens; der mehrreihig am Umfang des Lenkrades angeordnet sein kann und eine Auswertung der im menschlichen Körper erzeugten Ströme zusätzlich zu den durch Druckausübung erzeugten Signalen ermöglicht.

In Figur 5 ist ein Ausführungsbeispiel einer elektrischen Auswerteeinrichtung für die Ausgangssignale der Elemente dargestellt, wobei diese Anwendung lediglich ein Beispiel darstellt und viele andere Anwendungsmöglichkeiten denkbar sind. In dieser Figur ist das Lenkrad 1 wiederum lediglich schematisch dargestellt, und die Ausgangssignale der Sensorelemente 40 bis 45 beziehungsweise 51 werden einer Auswerteschaltung 21 zugeführt, die aus einer Versorgungsschaltung 29 gespeist wird. Die Ausgangssignale der Auswerteschaltung können beispielsweise einer Abschalteinrichtung 22 für den Antriebsmotor eines Fahrzeuges zugeführt werden, um diesen bei Feststellung einer Anomalität umgehend abschalten zu können. Weiterhin können die Ausgangssignale der Auswerteschaltung 21 über einen Wahlschalter 23 und einem weiteren Wahlschalter 24 entweder einer optischen oder akustischen Signalisierungseinrichtung 26 oder einer in dem Fahrzeug angeordneten Telefonanlage 25 zugeführt werden, die dann einen Notruf an nur schematisch mit 28 bezeichnete Rettungsdienste absetzt.

Obwohl in der vorstehenden Beschreibung lediglich auf in einem Lenkrad-Kranz angeordnete Sensorelemente eingegangen wurde, ist es genauso möglich, den Figuren 2 beziehungsweise 5 entsprechende Sensorelemente in andere Betätigungselemente eines Fahrzeuges, beispielsweise in den Gangschalthebel, oder irgendwelche Bedienungselemente von anderen Fahrzeugen, Luftfahrzeugen oder Maschinen anzuordnen, bei denen ebenfalls eine Überwachung und eine Notfallmeldung erforderlich ist.

## Patentansprüche

1. Überwachungs- und Notfallsystem für Kraftfahrzeuge, mit einer Anzahl von Sensoren, die auf Steuerungs- und/oder Betätigungseinrichtungen des Kraftfahrzeuges angeordnet sind, mit Auswerteeinrichtungen zur Auswertung der Ausgangssignale der Sensoren, und mit Signalisierungseinrichtungen, die Steuersignale an Signalgeber und/oder Betriebseinrichtungen des Fahrzeugs liefern, wobei die Steuerungs- und/oder Betätigungseinrichtungen (1) einen Kern (5) und eine diesen zumindest teilweise abdeckende Außenhülle (3) aufweisen und Sensorelemente (40-43; 51) zwischen dem Kern (5) und dessen Außenhülle (3) eingebettet und über einen wesentlichen Teil einer Außenoberfläche der Betätigungseinrichtungen (1) verteilt sind, und wobei die Sensorelemente (40-43) die Außenhülle (3) elastisch von dem Kern (5) fort vorspannende elastische Einrichtungen (44, 45; 51) umfassen und die Sensorelemente bei einer Verformung der Außenhülle (3) in Richtung auf den Kern (5) ein Ausgangssignal liefern, wobei die elastischen Einrichtungen durch eine innen liegende Gummischicht (45) gebildet sind, wobei zwischen dem Kern (5) und der inneren Gummischicht (45) ein Leiterelement (42) mit in Aussparungen (47) der inneren Gummischicht (45) vorspringenden Kontaktvorsprüngen angeordnet ist, deren Höhe kleiner als die Dicke der inneren Gummischicht (45) ist, **dadurch gekennzeichnet, dass** die elastischen Eintischtung auch durch eine außen liegende Gummischicht (44) gebildet sind wobei zwischen der außen liegenden Gummischicht (44) und der Außenhülle (3) eine weitere Kontaktbahn (40) mit sich in Aussparungen (46) in der außen liegenden Gummischicht (44) erstreckenden Kontaktvorsprüngen (41) angeordnet ist, die eine geringere Höhe aufweisen, als die außen liegende Gummischicht (44).

2. System nach Anspruch 1, **dadurch gekennzeichnet, dass** die Kontaktvorsprünge (41, 43) bei Druckausübung miteinander in elektrischen Kontakt kommen und ein Sensor-Ausgangssignal liefern.

3. System nach Anspruch 1, **dadurch gekennzeichnet, dass** die Kontaktvorsprünge (41, 43) Einzelelemente eines kapazitiven Sensors bilden.

4. System nach einem der vorhergehenden Ansprüche, **dadurch gekennzeichnet, dass** die Steuerungs- und/oder Betätigungseinrichtungen ein Lenkrad (1) umfassen.

5. System nach einem der vorhergehenden Ansprüche, **dadurch gekennzeichnet, dass** die Steuerungs- und/oder Betätigungseinrichtungen einen Gangschalthebel umfassen.

6. System nach einem der vorhergehenden Ansprüche, **dadurch gekennzeichnet, dass** zweite Drucksensoren mit einer der Lenkradgestaltung entsprechenden Gestaltung auf einem Gangschalthebel angeordnet sind.

7. System nach einem der vorhergehenden Ansprüche, **dadurch gekennzeichnet, dass** mit der Außenhülle (3) ein leitender Faden in zumindest einer Reihe am Umfang des Lenkrades vernäht ist.

## Claims

1. A monitoring and emergency system for motor vehicles, comprising:
a plurality of sensors arranged on control and/or actuating means of the motor vehicle;
evaluating means for evaluating the output signals of said sensor elements; and
signalisation means providing control signals to signaling transmitter means and/or operating means of the motor vehicle, said control and/or actuating means (1) comprising a core (5) and an outer cover (3) at least partially covering the core (5),
sensor elements (40-43; 51) being embedded between the core (5) and said outer cover (3) thereof and distributed over a substantial portion of the outer surface of the control and/or actuating means (1),
said sensor elements (40-43) comprising resilient means (44, 45; 51) elastically biasing the outer cover (3) away from the core, said sensor elements providing an output signal on deforming the outer cover (3) in a direction towards the core (5),
wherein said resilient means being formed by am inner rubber layer (45), wherein between the core (5) and the inner rubber layer (45) a conductor element (42) is disposed having contact bosses extending into recesses (47) of the inner rubber layer (45), the height of the contact bosses being less than the thickness of the inner rubber layer (45), in that between the outer rubber layer (44) and the outer cover (1, 2) a further conductor layer (40) having contact bosses (41) extending into recesses (46) of the outer rubber layer (44) is disposed, said contact bosses (41) having a height which is less than the thickness of the outer rubber layer (44),
**characterised in that** said resilient means are further formed by an outer rubber layer (44), wherein between the outer rubber layer (44) and the outer cover (3) a further contact track (40) is disposed having contact bosses (41) extending into cut-outs (46) of said outer rubber layer (44), said contact bosses (41) having a smaller height than the outer rubber layer (44).

2. The system according to claim 1, **characterized in that** said contact bosses (41, 43) are brought in electrical contact with one another on excerting a pressure thereon and provide a sensor output signal.

3. The system according to claim 1, **characterized in that** said contact bosses (41, 43) form individual elements of a capacitive sensor.

4. The system according to any of the preceding claims, **characterized in that** the control and/or actuating means comprise a steering wheel (1).

5. The system according to any of the preceding claims, **characterized in that** the control and/or actuating means comprise a gear shift lever.

6. The system according to any of the preceding claims, **characterized in that** second pressure sensors having a configuration corresponding to that of the steering wheel are arranged on a gear shift lever.

7. The system according to any of the preceding claims, **characterized in that** a conducting thread is sewn with the outer cover (3) in at least one row on the circumference of the steering wheel.

## Revendications

1. Système de surveillance et d'urgence pour véhicules automobiles avec une pluralité de capteurs qui sont disposés sur des dispositifs de commande et/ou d'actionnement du véhicule automobile, avec des dispositifs d'évaluation servant à évaluer les signaux de sortie des capteurs et avec des dispositifs de signalisation qui délivrent des signaux d'actionnement aux transmetteurs de signaux et/ou dispositifs de fonctionnement du véhicule automobile, les dispositifs de commande et/ou d'actionnement (1) comportant un noyau (5) et une enveloppe extérieure (3) recouvrant au moins en partie celui-ci et des éléments de détection (40-43 ; 51) étant intégrés entre le noyau (5) et son enveloppe extérieure (3) et étant répartis sur une partie essentielle d'une surface extérieure des dispositifs d'actionnement (1) et dans lequel les éléments de détection (40-43) comportent l'enveloppe extérieure (3), des dispositifs (44, 45 ; 51) élastiques prétendus élastiquement et s'éloignant du noyau (5) et les éléments de détection délivrent un signal de sortie en cas de déformation de l'enveloppe extérieure (3) en direction du noyau (5), dans lequel les dispositifs élastiques sont formés par une couche de caoutchouc intérieure (45), dans lequel un élément conducteur (42) avec des saillies de contact en saillie dans des évidements (47) de la couche de caoutchouc intérieure (45) sont disposés entre le noyau (5) et la couche de caoutchouc intérieure (45), dont la hauteur est inférieure à l'épaisseur de la couche de caoutchouc intérieure(45), **caractérisé en ce que** les dispositifs élastiques sont également formés par une couche de caoutchouc extérieure (44), dans lequel une autre piste de contact (40) avec des saillies de contact (41) s'étendant dans des évidements (46) dans la couche de caoutchouc extérieure (44), est disposée entre la couche de caoutchouc extérieure (44) et l'enveloppe extérieure (3), qui comportent une hauteur plus faible que celle de la couche de caoutchouc extérieure (44).

2. Système selon la revendication 1, **caractérisé en ce que** les saillies de contact (41, 43) viennent en contact électrique entre elles lors de l'exercice d'une pression et délivrent un signal de sortie de détection.

3. Système selon la revendication 1, **caractérisé en ce que** les saillies de contact (41, 43) forment des éléments individuels d'un capteur capacitif.

4. Système selon l'une quelconque des revendications précédentes, **caractérisé en ce que** les dispositifs de commande et/ou d'actionnement comprennent un volant (1).

5. Système selon l'une quelconque des revendications précédentes, **caractérisée en ce que** les dispositifs de commande et/ou d'actionnement comprennent un levier de vitesses.

6. Système selon l'une quelconque des revendications précédentes, **caractérisée en ce que** des deuxièmes capteurs de pression avec une configuration correspondant à une configuration de volant sont disposés sur un levier de vitesses.

7. Système selon l'une quelconque des revendications précédentes, **caractérisée en ce qu'**un fil conducteur est cousu avec l'enveloppe extérieure (3) dans au moins une rangée sur la périphérie du volant.
